# EUROPEAN PATENT APPLICATION

(11) **EP 0 873 861 A2**
(43) Date of publication of application: **28.10.1998**
(21) Application number: 98830236.0
(22) Date of filing: 20.04.1998
(51) Int. Cl.: B32B 17/10, C03C 27/12

(54) **A process for the manufacture of a glass and plastic complex suitable to be used as an anti-burglary windscreen in an automobile**

(30) Priority: 24.04.1997 IT RM970242
(71) Applicant: Società Italiana Vetro - SIV S.p.A., 66050 San Salvo (Chieti) (IT)
(72) Inventor: Giuliani, Sabato, 86039 Termoli CB (IT); Radoccia, Roberto, 66054 Vasto CH (IT); Capriotti, Luigi, 63037 Porto d'Ascoli AP (IT)
(74) Representative: Bazzichelli, Alfredo

(57) **Abstract**

A glass and plastic complex designed to be used as a mobile anti-burglary window in an automobile has peripheral darkened strips (B), equipped with transparent windows (7) in correspondence with the areas in which the systems connecting to the movement devices are applied. In these windows the transition areas show partially and decreasingly darkened areas, to avoid any undesirable accumulation of tension. This solution makes it possible to employ a manufacturing process for the complex involving simultaneous curving of the sheets of glass, thus reducing production costs and at the same time providing a product capable of passing the tests required by car manufacturers.

## Description

The present invention relates to a process for the manufacture of a glass and plastic complex that is particularly suitable to be used as a mobile anti-burglary window for automobiles.

French Utility Model 9508541 describes a layered anti-burglary window for automobiles formed using a complex made up of sheets of glass, joined to a central layer of polycarbonate by means of two polyurethane films, and having a plastic anti-shatter layer applied on the surface of the glass that faces into the vehicle.

The anti-burglary function of a sheet of glass does not derive merely from a suitable combination of the materials of which it is made, but also from the process used to manufacture it.

In fact, as well as the typical properties of the materials making up the complex, it is important, in order to achieve an effective anti-burglary action, to take into account the level of tension and the resulting mechanical resistance of the glass.

Furthermore, the manufacturing process must not only be economically convenient, but also competitive with respect to other known processes, in order to obtain a product with a quality in line with current regulations and at the same time with lower manufacturing costs.

The state of the art teaches that in the manufacture of anti-burglary products the sheets of glass are curved one at a time in order to reach tensions that will allow the complex to pass the tests required by Car Manufacturers and current regulations.

Individual curving represents a problem, in that it causes unacceptable optical deformaticn, and also results in a high percentage of rejects which do not fit together perfectly.

This first problem results in high manufacturing costs.

Another problem lies in the fact that, as it is necessary, for aesthetic reasons, to apply a darkening strip on the edge of the glass, the vitrifying paints used to form the strip render the edge of the sheet of glass more fragile.

This increased fragility is particularly dangerous when the glass in question is of the descending or mobile type, which is connected by means of brackets to the mcving mechanisms. In fact, under certain conditions, there is a concentration of tension in the connection areas which can result in breakage of the piece.

A further problem is represented by the fact that the plastic anti-shatter layer must be applied so as to cover the whole inner surface of the sheet of glass and part of the darkening strip, as this layer, for safety purposes, must cover as much of the surface of the glass as possible.

In this case the roughness and thickness of the darkening strip must remain within clearly defined limits, in order to prevent, or at any rate reduce the problems deriving from possible detachment of the anti-shatter layer, when the latter recovers its original form after being applied to the surface of the sheet of glass and of the strip.

The above problems can be overcome using the process according to the present invention, in which the edge of the two sheets of glass forming the glass and plastic complex are covered with a layer of vitrifying paint, forming a darkening strip of suitable size.

The darkening strip has at least one transparent window, formed in correspondence with the area in which the devices connecting the glass to the movement mechanism are applied, so as to avoid any increased fragility of the glass in these critical areas.

Furthermore, in correspondence with said window, in order to avoid a rapid change in the residual tension in the glass between the transparent portion and the non-transparent portion as a result of the curving process, which would generate uncontrolled and undesirable states of tension, a transition area is created that consists in a partial darkening, made by partial application of paint to the surface. This partial application of paint is preferably in the form of dots. Furthermore, said dots decrease in size as they move from the fully darkened area towards the transparent area.

Different types of partial and decreasing paint application can be used, involving a wide range of geometrical figures. For example, as an alternative to the dot version, it is also possible to use a version involving lines of decreasing thickness.

The shape of the transparent window is preferably rectangular, bearing in mind that the shape of the connection systems is likewise generally rectangular. However, the shape and size of said windows can be adapted to the shape and size of the connection systems.

The two sheets of glass forming the complex are then placed together on the same curving mould, and are curved at the same time in a suitable curving apparatus and then joined together using layers of polycarbonate and polyurethane and subjected to a process of lamination.

The state of tension in the glass manufactured as described above complies with current standards and allows the end product, assembled with the layers of polycarbonate, polyurethane and anti-shatter material, to stand up to the functionality, reliability and safety tests required by car manufacturers for their vehicles.

To adapt the anti-shatter behaviour of the glass to the requirements of car manufacturers the thickness of the anti-shatter film applied on the outer surface of the inner sheet of glass is preferably between 25µ and 250µ.

Furthermore, to respond to functional and/or aesthetic needs, a coloured version of the anti-shatter film can also be used, with a suitable reduction in light transmission values, or the film can be provided with reflecting and/or anti-abrasion coatings.

Object of the present invention is therefore a process for the manufacture of a glass and plastic complex particularly suitable for use as a mobile anti-burglary glass in an automobile, comprising:
a) a sheet of polycarbonate glued to the inner surface of an outer sheet of glass and to the inner surface of an inner sheet of glass by means of respective layers of polyurethane, used in the form of layers of transparent adhesive;
b) a transparent plastic anti-shatter layer applied on the external surface of the internal sheet of glass
characterised in that the following stages are carried out:
- application on the edge of at least one of the sheets of glass of a darkening strip having at least one uncovered window in correspondence with the area/s in which the systems connecting to the glass moving mechanism are to be applied;
- firing said strip in an oven to join it intimately to the glass itself;
- curving the sheets of glass simultaneously in the same curving mould;
- assembling the sheets of glass formed in this way using layers of polycarbonate and polyurethane;
- laminating the glass and plastic complex;
- applying an anti-shatter film on the outer surface of the inner sheet of glass.

A further object of the present invention is a glass and plastic complex particularly suited for use as an mobile anti-burglary glass in an automobile, comprising:
a) a sheet of polycarbonate glued to the inner surface of an outer sheet of glass and to the inner surface of an inner sheet of glass by means of respective layers of polyurethane, used in the form of layers of transparent adhesive;
b) a transparent plastic anti-shatter layer applied on the external surface of the internal sheet of glass;
characterised in that it has at least one peripheral darkening strip provided with at least one uncovered window formed in correspondence with the area in which the devices connecting to the moving mechanism are applied.

Further characteristics and advantages of the present invention will be described in greater detail with the aid of the enclosed drawings, in which:

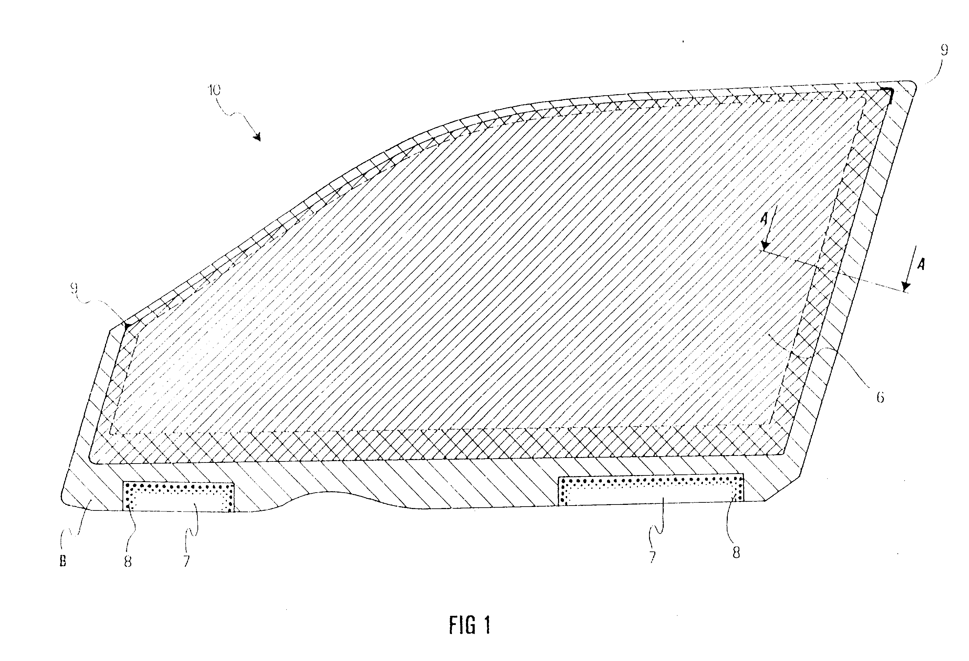

- figure 1 shows a view of an anti-burglary side window made according to the invention;

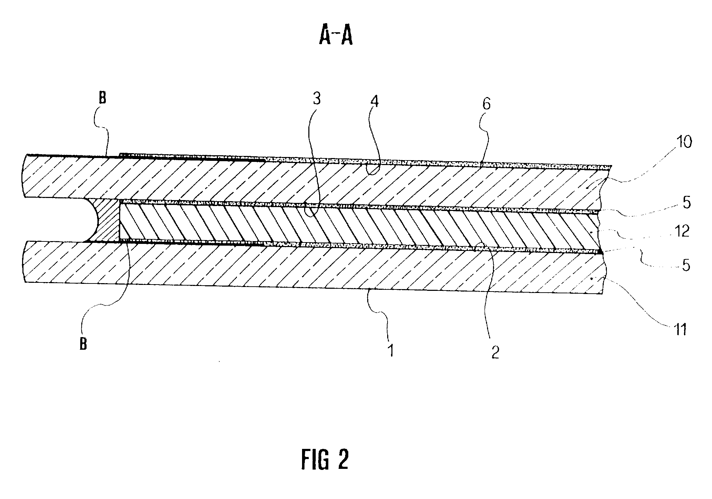

- figure 2 shows a detailed cross-section of the glass along line A-A of figure 1.

According to the present invention a vertically mobile side window is made up of an inner sheet of glass 10 and of an outer sheet of glass 11. For example, the sheets of glass can have a thickness of 2.1 mm. Again as an example, both sheets of glass can be of the same thickness.

For the sake of ease, in the following description the outer surface of the outer sheet of glass 11 will be indicated with 1, the inner surface of the outer sheet of glass 11 will be indicated with 2, the inner surface of the inner sheet of glass 10 will be indicated with 3, and the outer surface of the inner sheet of glass 10 will be indicated with 4.

Darkening strips B are deposited on the edges of the two sheets of glass, on surface 2 and surface 4, respectively, by means of a serigraphic process.

For this purpose the edges of the two sheets of glass forming the glass and plastic complex are covered with a layer of vitrifying paint, which forms the darkening strip B, of a suitable width.

The thickness of the darkening strip B is approximately 13 µ +2/-5.

Its roughness, measured according to DIN 4768, is RZ DIN 4µ+/-1 and the gloss with illumination at 60° measured according to specification DIN 67530 is 26% +/- 2.

The strips B have at least one transparent window 7, formed in correspondence to the areas in which the devices connecting the glass to the moving mechanism are applied, so as to avoid any increase in the fragility of the glass in these critical areas.

Furthermore, in correspondence with these windows 7, in order to avoid a sudden difference in residual tension in the glass between the transparent part and the non-transparent part as a result of the curving process, which would generate uncontrolled and undesired states of tension, a transition area 8 is created, consisting in an area of partial darkening which is formed preferably by application of a partial layer of paint onto the surface. For preference this partial layer of paint takes the form of dots. Furthermore, these dots decrease in size as they move away from the completely darkened area and towards the transparent area.

Different models of partial and decreasing coverage can be employed, using the widest possible variety of geometrical shapes.

The shape of the transparent window 7 is preferably rectangular, bearing in mind that the shape of the connection systems is likewise generally rectangular. The windows 7 have a shape and size such as to adapt to the connection systems, not shown in the figures, which are generally made up of brackets; between the covered and uncovered areas is the transition area 8 which is partially darkened.

This transition area 8 is painted with a covering of dots, said dots decreasing in size as they move away from the covered area and towards the uncovered area, so as to give a gradual passage from a transparent area to a completely opaque one.

The sheets of glass are then subjected to a firing process, so that the serigraphic paint forms a vitreous bond with the glass.

The two sheets of glass 10 and 11 forming the complex are then placed together on the same curving mould, and are curved simultaneously in a suitable curving apparatus and subsequently joined with layers 5 of polyurethane and a central layer 12 of polycarbonate.

The central layer 12 of polycarbonate, with a thickness of 3 mm, is assembled together with the sheets of glass 10 and 11 and with the two layers 5 of polyurethane, with a thickness of 0.76 mm; the complex formed in this way is subjected to a lamination process.

Subsequently, a film 6 with anti-shatter properties is applied on the outer surface 4 of the inner sheet of glass in correspondence with reference points in the form of slots 9 formed on the strip B, which have the aim of allowing perfect centring of the anti-shatter layer 6.

To adapt the behaviour of the anti-shatter layer to the requirements of the car manufacturers the thickness of the anti-shatter film 6 applied on the outer surface 4 of the inner sheet of glass 10 is preferably between 25µ and 250µ.

Furthermore, to comply with functional and/or aesthetic needs, a coloured version of the anti-shatter film 6 can be used, with suitable light transmission reduction values, or the film can be provided with reflecting and/or anti-abrasion coatings.

The state of tension in the sheets of glass manufactured as described above complies with current standards and enables the finished product, when assembled with the polycarbonate layer 12, polyurethane layer 5 and anti-shatter layer 6, to stand up to the tests on functionality, reliability and safety required by car manufacturers for their vehicles.

Although the invention has been described with reference to a preferred embodiment thereof, it is understood that variations and modifications can be made thereto without departing from the spirit and scope of the invention itself.

## Claims

1. A process for the manufacture of a glass and plastic complex particularly suitable for use as a mobile anti-burglary glass in an automobile, comprising:
a) a sheet of polycarbonate (12) glued to the inner surface (2) of an outer sheet of glass (11) and to the inner surface (3) of an inner sheet of glass (10) by means of respective layers (5) of polyurethane, used in the form of layers of transparent adhesive;
b) a transparent plastic anti-shatter layer (6) applied on the external surface (4) of the internal sheet of glass (10);
characterised in that the following stages are carried out:
- application on the edge of at least one of the sheets of glass (10, 11) of a darkening strip (B) having at least one uncovered window (7) in correspondence with the area/s in which the systems connecting to the glass moving mechanism are to be applied;
- firing said strip (B) in an oven to join it intimately to the glass itself;
- curving the sheets of glass (10,11) simultaneously in the same curving mould;
- assembling the sheets of glass formed in this way using layers (5) of polycarbonate and polyurethane;
- laminating the glass and plastic complex;
- applying an anti-shatter film (6) on the outer surface of the inner sheet of glass.

2. A process according to claim 1, characterised in that peripheral darkening strips (B) are applied respectively on the outer surface (4) of the inner sheet of glass (10) and on the inner surface (2) of the outer sheet of glass (11).

3. A process according to any one of the preceding claims, characterised in that the window (7) has a surface (8) for transition from the covered area tc the uncovered area which is partially darkened.

4. A process according to claim 3, characterised in that the partially darkened surface gradually decreases in darkness as it passes from the covered area to the uncovered area.

5. A process according to claim 4, characterised in that the partial darkening is achieved using a series of dots.

6. A process according to claim 5, characterised in that the size of the dots decreases as the dots move away from the covered area and towards the uncovered area.

7. A process according to any one of the preceding claims, characterised in that the thickness of the darkening strip is approximately 13µ (+2, -5) and has a level of roughness on 4µ +/-1, measured according to DIN 4768.

8. A process according to any one of the preceding claims, characterised in that the darkening strip has a gloss value of 26% +/-2, measured at 60° according to DIN 67530.

9. A glass and plastic complex particularly suited for use as an mobile anti-burglary glass in an automobile, comprising:
a) a sheet (12) of polycarbonate glued to the inner surface (2) of an outer sheet of glass (11) and to the inner surface (3) of an inner sheet of glass (10) by means of respective layers (5) of polyurethane, used in the form of layers of transparent adhesive;
b) a transparent plastic anti-shatter layer (6) applied on the external surface (4) of the internal sheet of glass (10);
characterised in that it has at least one peripheral darkening strip (B) provided with at least one uncovered window (7) formed in correspondence with the area in which the devices connecting to the moving mechanism are applied.

10. A glass and plastic complex according to claim 9, characterised in that between the window (7) and the darkening strip (B) there is a transition area (8) which is partially darkened.

11. A glass and plastic complex according to claim 10, characterised in that the partially darkened area decreases in darkness as it moves from the covered area towards the uncovered area.

12. A glass and plastic complex according to claim 10, characterised in that it has a transition area (8) formed using a series of dots.

13. A glass and plastic complex according to claim 12, characterised in that the dots decrease in size as they move away from the covered area and towards the uncovered area.

14. A glass and plastic complex according to any one of claims 9 to 13, characterised in that it has a roughness equivalent to 4µ +/- 1 and a thickness of 13µ +2/-5.

15. A glass and plastic complex according to any one of claims 9 to 14, characterised in that it comprises centring slots (9) for the anti-shatter film (6), said slots being positioned on the darkening strip on surface (4).

16. A glass and plastic complex according to any one of claims 9 to 15, characterised in that the anti-shatter layer (6) has a thickness of between 25µ and 250µ.

17. A glass and plastic complex for automobiles according to any one of claims 9 to 16, characterised in that it is made up of a complex comprising two sheets of glass (10, 11) with a thickness of 2.1 mm, a central layer of polycarbonate (12) with a thickness of 3 mm glued to said sheets of glass by two layers (5) of polyurethane, with a thickness of 0.76 mm each, and an anti-shatter layer (6) with a thickness of 100µ applied to the outer surface of the inner sheet of glass (10).

18. A glass and plastic complex according to any one of claims 9 to 17, characterised in that the anti-shatter film (6) has an anti-abrasive coating.

19. A glass and plastic complex according to any one of claims 9 to 18, characterised in that it has a coloured anti-shatter film.
